(19) **Europäisches Patentamt European Patent Office Office européen des brevets**

(11) **EP 2 019 299 B1**

(12) **EUROPEAN PATENT SPECIFICATION**

(45) Date of publication and mention of the grant of the patent:
**27.04.2011 Bulletin 2011/17**

(51) Int Cl.:
*G01J 3/32* (2006.01) *G01J 3/28* (2006.01)

(21) Application number: **08018882.4**

(22) Date of filing: **02.02.2007**

(54) **Hyperspectral chemical or property imaging with image back projection onto imaged object**

Hyperspektrale Bilderfassung zur Bestimmung von Objekteigenschaften mit Rückprojektion des Bildes auf das Objekt

Imagerie hyperspectrale pour déterminer les propriétés d'un objet avec projection de l'image obtenue à l'objet

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.02.2006 GB 0602137**

(43) Date of publication of application:
**28.01.2009 Bulletin 2009/05**

(62) Document number(s) of the earlier application(s) in accordance with Art. 76 EPC:
**07712669.6 / 1 984 713**

(73) Proprietor: **NTNU Technology Transfer AS 7491 Trondheim (NO)**

(72) Inventor: **Alsberg, Bjørn, NTNU Technology Transfer AS 7465 Trondheim (NO)**

(74) Representative: **Jackson, Robert Patrick Dehns St Bride's House 10 Salisbury Square London EC4Y 8JD (GB)**

(56) References cited:
**US-B1- 6 208 752**

• **LAU D L ET AL: "Real-time multispectral color video synthesis using an array of commodity cameras" REAL-TIME IMAGING, ACADEMIC PRESS LIMITED, GB, vol. 11, no. 2, April 2005 (2005-04), pages 109-116, XP004936810 ISSN: 1077-2014**
• **JEFFREY H. BOWLES, JOHN A. ANTONIADES, MARK M. BAUMBACK, JOHN M. GROSSMANN, DANIEL HAAS, PETER J. PALMADESSO, AND JOHN STRACKA: "Real-time analysis of hyperspectral data sets using NRL's ORASIS algorithm" SPIE PROCEEDINGS, vol. 3118, 1997, pages 38-45, XP002430295**

**Description**

The present invention relates to apparatus and methods for producing chemical or property images and enabling such images to be visualised more effectively. In preferred forms, the invention enables real-time or quasi-real-time images to be produced using hyperspectral cameras.

A chemical (or property) image is an image where the concentration of given chemical(s) (or other property) is shown on a "map" of the sample that is being imaged. This is normally achieved by obtaining spectral information from a large number of spatial points in the sample.

A conventional digital camera produces a colour image by using a set of filters to separate the light into the red, green and blue bands. However, the data provided by the colours in such images is of very limited value for determining chemical properties of the sample. It is well known that if a spectrum is collected across a given wavelength range, e.g. the infra-red (IR) or near infra-red (NIR) regions, it can be used to reveal the chemical composition of the sample. In the case of IR and NIR, this is due to the absorption of particular frequencies by one or more chemical species within the sample. More generally, molecules absorb energy at different frequencies, which influence a range of properties such as vibration, rotation, transition between orbitals, nuclear resonance, etc. Thus, the absorption pattern at a certain set of frequencies can be used to identify different molecular species and physical properties.

Multispectral and hyperspectral cameras are now available that produce digital output in the form of spatially resolved spectral data. Where the output is less than ten different wavelengths then a *multispectral* image is produced, spatially resolved image data at a higher number of wavelengths is *hyperspectral.*

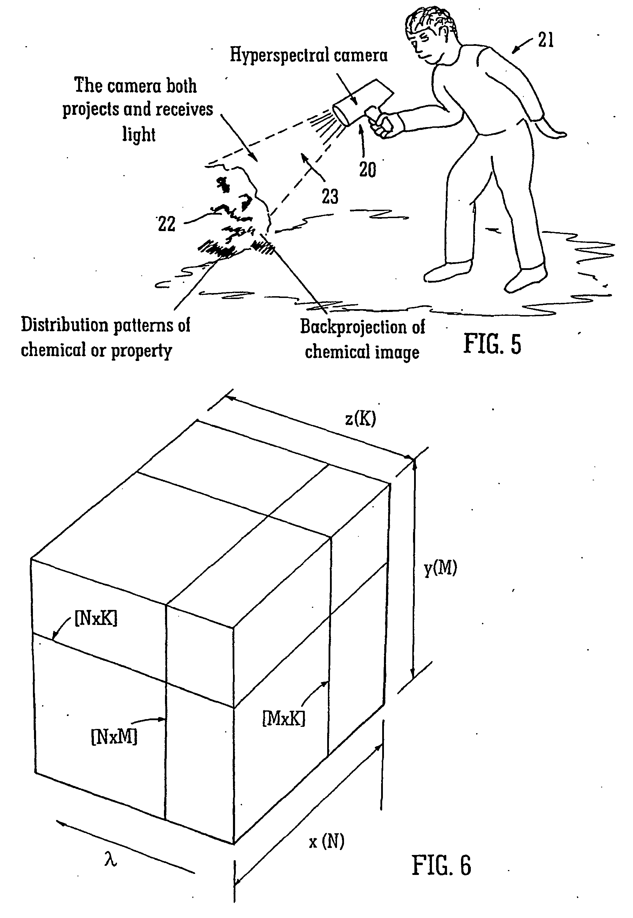

Thus, hyperspectral imaging is the acquisition of images across a large, usually contiguous, series of narrow spectral bands (i.e. at a series of different wavelengths) where the spectral data obtained is comparable to traditional (single-point) spectroscopic techniques. In this way, the complete spatial and spectroscopic information of the sample is integrated. Spectral images are visualized as a three-dimensional block of data spanning one wavelength and two spatial dimensions called a hyperspectral datacube or "hypercube". For our discussion we will assume this cube has dimensions N x M x K, where N is the number of rows and M the number of columns of pixels and K is the number of wavelengths at which intensity values have been obtained. Thus for each pixel in the image there is a spectrum, i.e. a set of intensity/absorption values for each of a large number of discrete wavelengths. Such a hypercube is shown schematically in figure 6. By analysing each of the spectra, chemical composition data can be found for each pixel and this means that an image can be produced which shows the spatially resolved composition of the sample. This is known as a chemical image.

In a simple case, the spectra can be analysed to identify a specific single compound and a map of the distribution of this compound across the sample can then be generated. However, more complex images may be produced showing the distribution of multiple compounds or different properties.

For a high-resolution hyperspectral image there will be millions of pixels, each representing a full spectrum of hundreds or thousands of sample wavelengths. Such data are well suited to multivariate analysis techniques such as principal component analysis (PCA), principal component regression (PCR), artificial neural networks, linear discriminant analysis, partial least squares (PLS) regression, and multi-component methods. Thus, using such known techniques a regression vector b can be generated using spectral data from mixtures of known composition. This vector relates composition to spectral data and so the vector can be regarded as a model to predict compound concentrations or properties from the spectral data.

As noted above, each pixel in the hyperspectral image will have associated with it an entire spectrum - i.e. a set of intensity values corresponding to each sample wavelength - which is a line, or vector, in the hypercube. When these values are multiplied by the corresponding coefficients of the model vector, the result is the predicted concentration value of the compound in question at that pixel. Thus, considering a pixel at position $(i, j)$, the intensity $y_{(ij)}$ at that point is given by:

$$y_{(ij)} = {}_{(ij)}x_1 b_1 + {}_{(ij)}x_2 b_2 + \ldots + {}_{(ij)}x_n b_n$$

where ${}_{(ij)}x_n$ is the intensity value at wavelength n and $b_n$ is the corresponding model vector coefficient. Thus,

$$y_{(ij)} = {}_{(i,j)}\mathbf{x}^T\mathbf{b}$$

where ${}_{(ij)}\mathbf{x}$ comprises the intensity values $x_1...x_n$ at point $(i, j)$.

The hypercube **X** of all the spectral data can be analysed by considering it as a series of two-dimensional "slabs" which can readily be handled as matrices. The slabs are all parallel to each other in the hypercube; in other words, the complete cube is effectively sliced up like a loaf to form a set of matrices whose dimensions correspond to those of one of the faces of the hypercube. There are three main ways of slicing the cube into slabs: matrices of size [M x K] along the x-direction, [N x K] along the y-direction and [N x M] along the z-axis. Thus, one slab is matrix $\mathbf{X}_i$ (having dimensions [M x K] or [N x K]) which comprises the intensity values of row or column i of pixels and so the concentration values for the corresponding row or column in the chemical image are given by:

$$y_i = \mathbf{X}_i\, \mathbf{b}$$

By repeatedly multiplying such matrices of data obtained from successive slabs of the hypercube by the model vector, estimates of the property across the entire image are provided. This may provide, for example, a map of the concentration of a compound such as glucose across the surface of the sample.

Classical hyperspectral imaging is performed using one of two basic principles: scanning by a pushbroom approach or by a tuneable filter approach, for example using an Acousto-Optic Tuneable Filter (AOTF).

In a pushbroom scanner, a line camera is used where the light is diffracted into different colour/wavelength components using a spectrograph onto a focal plane array (FPA). Thus, for each position of the line camera a spectrum is obtained for each point on that line. From the FPA, this data is subsequently streamed into a memory storage as the matrix of spectra **A**$j$. The index j indicates scanned line $j$. The dimensions of matrix A$_j$ are [M $\times$ K] where M is the number of spatial points along the line and K is the number of separate wavelengths in each spectrum. When scanning an area, hundreds or thousands of lines will be read into the camera to provide the hypercube **H** comprising the set of matrices **A**$_j$ for all values of $j$ (i.e. all lines). Each matrix **A**$_j$ is a "slab" of the hypercube representing a *line* of the image.

In the tuneable filter approach, instead of scanning the image stepwise in one spatial dimension, as in the pushbroom scanner, the entire spatial image is imaged while the camera scans through the different wavelengths. This is achieved by placing the tuneable filter between the image and the camera. AOTFs are particularly powerful tuneable filters. They are solid-state devices comprising a crystal filter whose transmission wavelength is controlled by attached piezoelectric transducers. The transducers create pressure waves in the crystal which changes its refractive index. These transducers are controlled by careful manipulation of the frequency of an applied electric field to vary the transmission wavelength of the filter in a stepwise manner. At each wavelength step, an image is captured which provides a matrix **I**$_j$ where $j$ is the wavelength step. Thus, each matrix **I**$_j$ represents a single *monochrome* image of the whole sample at wavelength $j$. Like matrices **A**$_j$, matrices **I**$_j$ are read into memory where they each form a slab of the hypercube **H**. (However, it will be noted that the two kinds of matrices contain different sets of information; they are orthogonal to each other in the hypercube).

Thus, in each approach, the hypercube is generated slab-by-slab and stored in memory. The data is then processed as described above in order to produce the desired output image. The choice of approach is a matter of design optimisation. The spectrograph in a pushbroom system provides better spectral resolution, but at a cost of speed compared to the tuneable filter system where the lack of moving parts enables the hypercube to be generated more rapidly.

It would be desirable to have hyperspectral cameras which can perform chemical imaging of their surroundings in real-time. However, current technology does not easily allow for this. A prototype real-time multispectral system is described in "SmartSpectra: Applying multispectral imaging to industrial environments", Vila, et al, Real-Time Imaging 11 (2005) 85-98. This uses an AOTF which is controlled not only to select pass-wavelengths, but also to vary their intensity. Varying the intensity of the light of a given wavelength by a predetermined amount is effectively an analogue method of calibrating the input light intensity to provide an output intensity value that can be represented directly in the chemical image. Thus, this system avoids the need for the calculation steps discussed above. However, it has significant drawbacks. The system is multispectral - it uses only six input wavelength bands - and the analogue calibration method is inherently less flexible and less precise than the digital systems used in the hyperspectral systems discussed above.

The most serious problem with the conventional digital approach is how to deal with the enormous amount of data which is generated by the hyperspectral camera. As discussed above, each image results in a hypercube which has two spatial dimensions and one wavelength dimension. If real time imaging is to be achieved, this data must be collected and processed at a rate of about 20-30 frames per second. Recording such a data cube multiple times per second is very difficult, but in theory possible if the cube is small enough, i.e. by making compromises with respect to spatial and/or wavelength resolution. However, the achievement of high resolutions in the spatial and wavelength dimensions is not possible with the prior art systems. There are solutions today which provide real-time multispectral cameras, but these only use a small number of wavelengths. The spectral resolution is also not sufficient for many purposes.

One suitable way to display hyperspectral or chemical/property imaging data is to use a computer monitor and where the data is real-time, or recorded for that matter, it may be displayed as a moving picture, for example as the hyperspectral camera (i.e. input device of whatever kind) moves around a three dimensional object or as the object moves. This enables, for example, the searching of an area (a room, human body, etc.) for traces of particular compounds such as explosives or narcotics. It is also possible to use other known displays.

However, each of these has the drawback that whilst a map or image showing the distribution of the compound or property in question is provided, it can be problematic to correlate a point on the image with the same point on the imaged surface in order, for example, to take a physical sample.

One approach to this is to use goggles or head-up display technology so that an image is provided to a user which overlies the subject of that image in the view of the user. This is a useful approach when the operator is not close to the subject or wishes to monitor it without being detected.

However, in other applications this may cause drawbacks because the image can only be seen by a single user and there may be a problem in registering the image in the goggles with the field of view of the user.

"Real-time multispectral color video synthesis using an array of commodity cameras", D. L. Lau et al, Real-Time Imaging 11 (2005) 109-116 discloses a system comprising an array of cameras arranged to capture a multispectral image of an object, and aligning the images recorded by the cameras using software.

The present invention provides a method of generating a chemical or property image of an object comprising the steps of receiving light from the object, obtaining hyperspectral image data from the light, processing the data to provide a chemical or property image, and projecting light representing the chemical or property image onto the object such that the projected light is in register with the imaged object so that compounds or properties detected in the image may be located on the object.

The spatial distribution of compounds or properties in/on the object may also be readily visualised. The image may be only of part of the object, but can be projected back onto the corresponding part of the object. It will be appreciated that the chemical image may then be seen by any number of viewers. Other kinds of property image may also be visualised in this manner.

The invention also extends to a corresponding projection apparatus and so, viewed from a further aspect the invention provides an apparatus for generating a chemical or property image of an object comprising a hyperspectral camera arranged to receive light from an object and to output hyperspectral image data, a processor for processing the hyperspectral data to provide a chemical or property image, and a projector arranged to project light representing the chemical or property image back towards the object, such that the chemical or property image is back-projected in register with the imaged object.

Preferably the light enters the camera along the same optical axis as the image is transmitted back to the object. The projection apparatus may incorporate a rotating mirror, or other arrangement to allow light from the imaged scene to pass into the apparatus via the same optical system as that which projects back the image. Such an arrangement switches the light path as it rotates. It is also possible to use a half-silvered mirror. This has the advantage of eliminating moving parts.

Where this is done but it would be necessary to take steps to prevent the projected image interfering with the sampled light. For example, the detected frequencies of light may be selected to differ from those used in the projected image. In this regard, a filter may be provided (e.g. just in front of the camera) to filter projected light frequencies from the light passing into the hyperspectral camera and/or a filter may be provided (e.g. just in front of the projector) to filter the frequencies being detected from the projected light.

Another approach is to use a laser projection system to draw the real-time images onto the sample surface. There are several advantages to using laser projection. One is that the operating wavelength of the laser can readily be selected to be outside the detection range of the hyperspectral camera which will permit the recording and drawing of results to be performed simultaneously without the need for any shutters. Another advantage is that lasers minimize the problem of focus when drawing on surfaces.

Applications include surveillance, forensic science, robotics, medical, biological and chemical science or monitoring activities where the user is closely investigating the surfaces of objects for different types of chemicals/properties. The system may, for example, be used in place of known systems using fluorescence for detecting blood in crime scene investigations. Here the user wears goggles for filtering certain wavelengths and a special lamp is used for inducing fluorescence. However, this known system has several disadvantages in that the user usually needs to spray a substance onto surfaces that react with the blood, he must switch off other light sources that can disturb the observation process and of course, the use of special goggles further reduces the visibility of the scene.

With the new system the user is able to work in full daylight or in a heavily illuminated area. The results from the chemical/property imaging method of this invention may be seen in the original scene itself as patterns and spots of bright artificial colours. This has a large impact on the user-friendliness of the system because it will allow the user, for example a forensic science investigator, to focus on the objects in the scene in a natural way and at the same time obtaining the additional information originating from the chemical/property imaging. This is a much less cumbersome and difficult approach to inspection than using goggles or computer screens.

In fact, the more light there is available, the better the hyperspectral camera will work. Preferably, the apparatus is configured so that the user is able to switch rapidly between different types of chemical/property image models, e.g. from ethanol to blood to gunpowder to TNT in rapid succession. In fact, the use of multiple artificial colouring makes it possible to overlay the results from more than one model onto the scene. However, it should be kept in mind that the original colours of the objects in the scene may mask or make it difficult to differentiate with respect to the chemical/property images projected onto it and so, preferably, this is taken into account, for example by allowing variation in the colours used for the projected image.

Preferably, the back projection is provided by sampling light from a source with a hyperspectral camera, generating a chemical/property image therefrom and then projecting the estimated chemical/property image onto the scene.

This is done repeatedly, preferably at a sufficient rate to give a real time or quasi-real time image. For non-moving objects it may be acceptable to use a frame rate of 3-10 frames per second (fps), provided that the apparatus is not moved quickly. Preferably, however, a rate of 10-20fps or more is used and most preferably it is 25-30fps, as with a TV or cinematic image.

Preferably, the apparatus is provided in the form of a hand-held device which can readily be directed at any object by the user.

Embodiments may use a method of generating a chemical or property image of a sample from hyperspectral image data obtained from that sample comprising the steps of:

    (a) obtaining only a portion of the hyperspectral image data;
    (b) processing the said portion of the hyperspectral image data using a model to generate spatially resolved chemical composition data or other property data concerning the sample;
    (c) repeating steps (a) and (b).

Thus, the generation of the chemical composition data, which may, for example, be presented in the form of a chemical image, is interleaved with the obtaining of the hyperspectral image data. In other words, the image is processed whilst scanning takes place. This is in contrast with the prior art digital methods where, as discussed above, the entire image data set is obtained and stored as a hypercube before being processed. Preferably, only the slab that is being processed is held in memory. This therefore avoids the use of a huge amount of computer memory, which is highly advantageous in itself. However, a greater benefit is the increased speed of the process by avoiding the need to address so much memory.

Consequently, provided that the invention is implemented using suitably fast hyperspectral and processing hardware, real time chemical images are possible.

Steps (a) and (b) will normally be repeated until the chemical or property image has been completed, although there may be applications where the process is truncated, for example where a high frame-rate takes priority or where only a partial image is required, thus every nth line could be omitted.

Embodiments may comprise apparatus for generating a chemical or property image comprising a hyperspectral camera for obtaining hyperspectral image data from a sample and a processor for generating chemical or property image data from sample image data using a model, wherein the processor is arranged to obtain from the camera only a portion of the hyperspectral image data and to processes said portion of the hyperspectral image data using the model to generate spatially resolved chemical composition data or other property data concerning the sample before obtaining and processing further samples of data.

The term "hyperspectral camera" includes any hyperspectral image input device including those discussed above. The apparatus may also comprise a suitable display unit to display an image formed by the chemical composition or other property data. The processor preferably repeats the obtaining and processing steps until a complete set of chemical or property image data has been produced.

The invention can be applied to both the hyperspectral imaging techniques referred to above. (Indeed, it can also be applied to mutispectral techniques.) Thus, where a pushbroom line scanner is used, each line of the scan may comprise a portion of the hyperspectral data. In a typical spectroscopic application, the portion of data therefore comprises a series of spectra corresponding to points on the sample along the line. This may be represented as a matrix whose dimensions are the number of points and the number of sample wavelengths respectively.

This data is then processed using a model as in the known techniques. Thus, the model may comprise a regression or classification vector generated theoretically or obtained from samples having known properties, for example using the known chemometric techniques discussed above. Any such model in the form of a vector will be referred to here as a model vector.

Preferably, the matrix is multiplied by the model vector to obtain image data for a line of a chemical image. This may, for example, provide a map of the distribution, and optionally concentration, of a given compound on (or in) the surface of a sample. This step is performed with the image data just after it has been obtained by the camera. Thus, there is no need to keep the matrix data after it has been processed in this way, and indeed it is preferred that it is overwritten in order to avoid unnecessary memory usage. As such, it is greatly preferred that no complete hypercube of camera image data is ever stored in memory.

If desired, a plurality of models (e.g. regression vectors) can be used corresponding to a respective plurality of compounds that are to be detected or properties. This can be done to provide multiple chemical images or single images using, for example, different colours to represent the presence of different compounds or properties. Although it is possible to use each vector sequentially, it is preferred to combine them into a matrix and to multiply the image matrix by this model matrix.

As the images can be produced in real time, the result can be displayed on a computer monitor or the like as a moving image.

Where the tuneable filter approach is employed, each image of the sample at a given sample wavelength may comprise a portion of the hyperspectral data. Thus, typically, the portion of data therefore comprises a monochromatic image. This may be represented as a matrix whose dimensions correspond to the linear dimensions of the image. As with the pushbroom approach, the model may be in the form of a regression vector.

However, in this approach, the coefficient of the model vector corresponding to the sample wavelength of the monochromatic image is preferably used to multiply *each* element of that matrix. The result may then be stored (e.g. in a particular computer memory location) as a further matrix. The next monochrome image, for a further wavelength is then obtained and each pixel intensity value multiplied by the coefficient of the model vector corresponding to the new sample wavelength to form a new matrix, which is then added to that in the memory. When this has been repeated for each wavelength that is required to be sampled, the memory will contain a complete set of data for a chemical image.

It is possible to sample every available wavelength sequentially. However, preferably only a selected subset of the available wavelengths are sampled.

It will be appreciated that where the model vector coefficient is zero, the result of the multiplication step is also zero. (Likewise, when the coefficient is small then the result is close to zero.) Consequently, it is preferred that where the coefficient is zero, no sample image is obtained at that wavelength. This has the advantage of speeding up the process.

It may also be desirable in some applications where speed is of greatest importance, to selectively omit sampling for other coefficient values, e.g. where these approximate to zero. Indeed, it is possible to be more selective and to choose to apply only a subset of the most important coefficients by applying known variable selection techniques.

In certain embodiments, a desired subset of sample wavelengths may be predetermined based on expert knowledge. Where specific compounds are being targeted, their most characteristic frequencies may be selected to form part or all of the subset.

Although the wavelengths could be sampled in any order, and may be sampled in sequence (whilst optionally omitting a selection as discussed above), it is preferred that the wavelengths are sampled in order of importance or magnitude of the model coefficients. It is a characteristic of tuneable filter systems that they can switch wavelength at an extremely high rate so this can readily be accommodated. Thus, the wavelengths corresponding to the largest value coefficients may be sampled first. Most preferably, the wavelengths are sampled in order of decreasing importance or magnitude of the corresponding model coefficients.

Particularly (but not only) when the sampling in order of decreasing importance or magnitude, the number of wavelengths actually sampled can be varied. Thus, when a higher frame rate is required (for example if the sample is moving) a smaller number of wavelengths can be sampled. If the wavelengths are sampled in such an order, then the "lost" data will always be the least important.

The techniques discussed above using multiple model vectors and those relating to displaying the results are equally applicable to a tuneable filter based system. Moreover, the principles described concerning the selection of the most important or largest (in absolute value) coefficients may also be applied to a pushbroom type system by providing a focal plane array that reports intensity values for only a subset of wavelengths.

It will be appreciated that the invention also extends to apparatus arranged to carry out any of the preferred forms of the above method, e.g. using tuneable filter or pushbroom approaches. It is envisaged that the processing steps will be carried out by computer processor(s) and so the invention also extends to computer apparatus configured to process data according to the above method.

It will be appreciated that the above processing techniques will normally be performed by means of software running on suitable computer apparatus. The invention therefore may comprise such computer apparatus and software arranged to cause such apparatus to perform the processing methods of the invention. Thus, according to further aspects, the invention may comprise a software product whether in tangible form (e.g. on disk) or obtained by way of download etc., configured to provide chemical or property image data from hyperspectral data in accordance with the above methods and/or for causing a computer to perform such a method.

Certain embodiments of the invention will now be described, by way of example only, and with reference to the accompanying drawings:

Figure 1 is a schematic illustration of an apparatus for generating a chemical image using a pushbroom approach;

Figure 2 is a schematic illustration of an apparatus for generating a chemical image using the tuneable filter approach;

Figures 3(a) and (b) further illustrate the operation of the apparatus of Figure 2;

Figure 4A is a schematic diagram showing the operation an apparatus for projecting a chemical image in real time onto a surface and which employs a normal light projector;

Figure 4B is a schematic diagram showing the operation an apparatus for projecting a chemical image in real time onto a surface and which employs a laser projector;

Figure 5 illustrates the use of the apparatus of Figure 4A or 4B; and

Figure 6 is a schematic illustration of a prior art hypercube of spectral data.

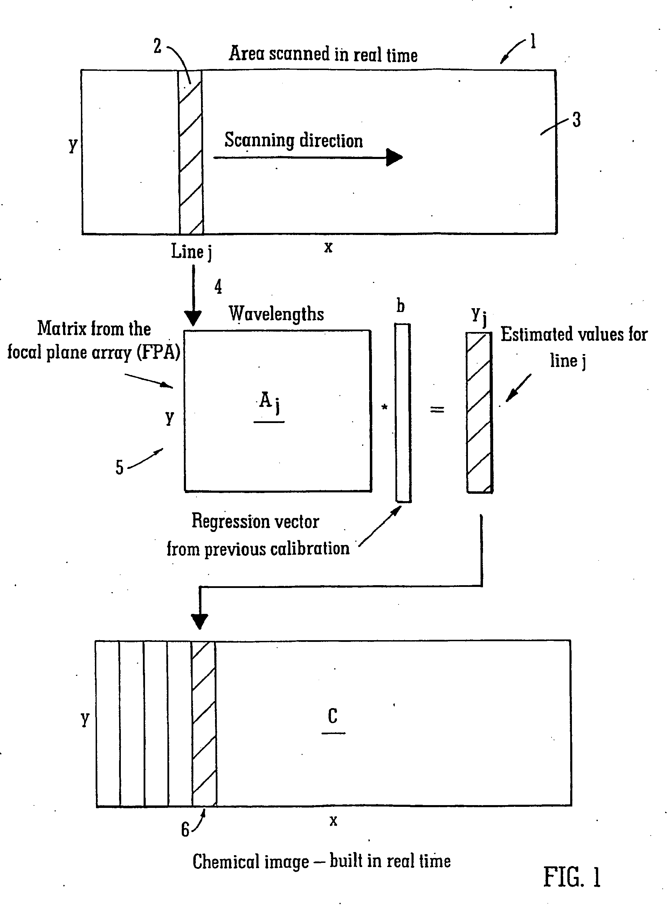

With reference to figure 1, a conventional pushbroom scanner apparatus 1 comprises a line camera 2, which is arranged to scan line-by-line across a sample 3. The camera contains a spectrograph (not shown) where the light is diffracted into different colour/wavelength components before the being detected by a focal plane array (FPA). This provides a digital output 4 which comprises a spectrum of K wavelengths for each of **M** pixels.

The output for each line number j is subsequently streamed into memory storage 5, which is part of a data processing apparatus (not shown), in the form of a matrix $\mathbf{A}_j$. The dimensions of matrix $\mathbf{A}_j$ are [M $\times$ K] where M is the number of spatial points along the line and K is the number of wavelengths in each spectrum. When scanning an area, hundreds or thousands of lines will be read into the camera. As discussed above, the traditional approach is to store $\mathbf{A}_j$ in a 3D hypercube (array). This is not done in the present invention which consequently is much faster. The next steps involved in this embodiment are as follows:

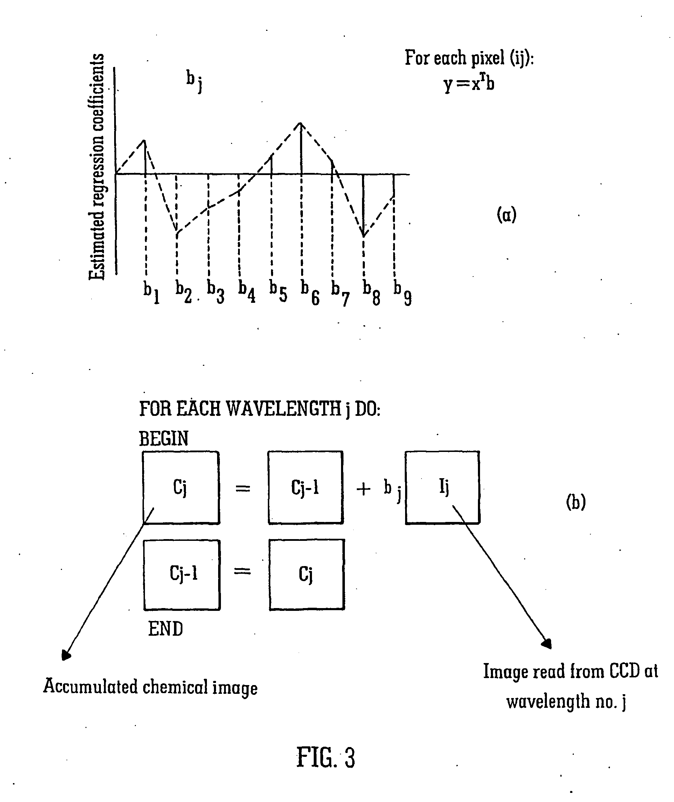

Matrix $\mathbf{A}_j$ is multiplied directly by a vector **b**, which has been obtained by a regression analysis in the known manner. This step is carried out immediately after the matrix is read into memory. Figure 3(a) is a schematic graph showing a plot of regression coefficients $b_j$ for $j$ = 1 to $9$, i.e. the 1st to 9th coefficients of the vector b. As in the prior art, it maps from spectrum to the relevant value (e.g. the concentration of compound which is to be detected in the image). Thus for the single line j recorded, the system performs:

$$\mathbf{y}_j = \mathbf{A}_j\,\mathbf{b} \qquad\qquad (1)$$

where $\mathbf{y}_j$ is the estimated value vector which gives the values (e.g. of the concentration of the compound) for each point in line $j$.

The next step is to insert $\mathbf{y}_j$ as column $j$ (reference 6) into a new matrix C which provides the data for the chemical image. Initially, **C** = 0. Thus, the concentration values or other data are mapped to a position in matrix **C** which corresponds to the spatial position in the sample from which that value was derived.

Subsequently, the scanner's line camera 2 is moved to the next line $j+1$ and the process above is repeated. This is done for each line until the entire sample has been imaged and the chemical image completed. The image may then be transmitted to, and shown on, a conventional computer monitor (not shown) with, for example, a grey-scale indicating the concentration of the compound being detected.

It will be seen that in this way the chemical image of a scene is generated on *the fly* as the scanner moves across the surface of the sample. Provided that highly parallel and fast hardware is employed, it is possible to perform the multiplication in Equation (1) extremely quickly so that it will not be a serious bottleneck in the process of scanning one line $j$ to the next $j + 1$. In this way, matrix C is recreated several times per second which means that real-time or near real-time imaging can be achieved by rapid line scanning across the sample at a corresponding frame rate.

In a modified version, multiple vectors $\mathbf{y}_j$ corresponding, for example, to a plurality of different compounds can be obtained as a matrix $\mathbf{Y}j$ using a matrix **B** of regression coefficients:

$$\mathbf{Y}_j = \mathbf{A}_j\,\mathbf{B} \qquad\qquad (2)$$

This means that a corresponding plurality of matrices **C** are then generated. The concentrations of the different compounds can then be provided in separate images, or in the same image. This can be done by using the intensity of a given colour in the image to represent the concentration of a particular compound. However, it will be appreciated that this will require a very high degree of processing power and may therefore only be practicable where specialist computers can be employed.

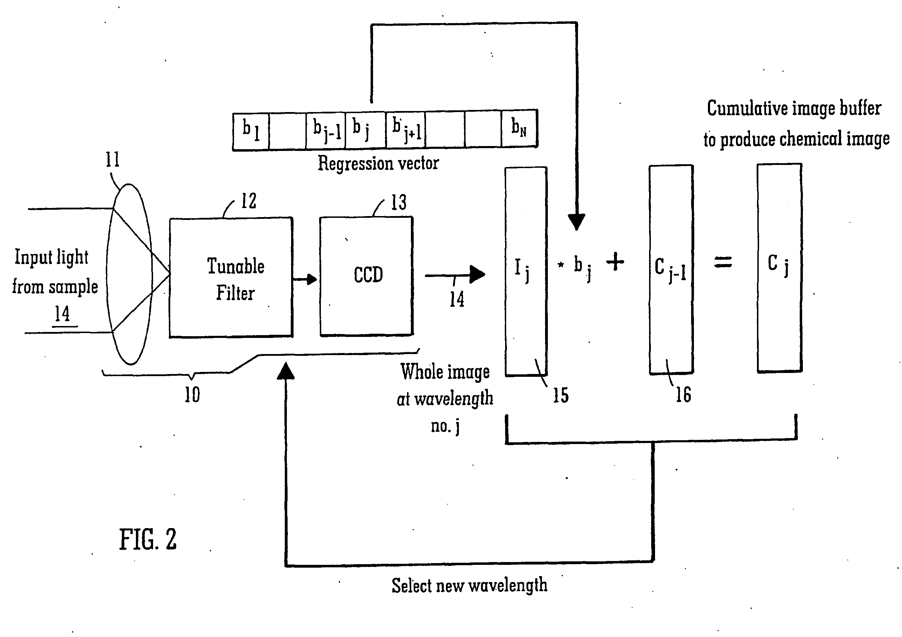

A second example is shown in Figure 2. This apparatus is based on the tuneable filter approach discussed earlier. The camera apparatus 10 itself is essentially conventional and comprises an objective lens 11, an Acousto-Optic Tuneable Filter (AOTF) 12 and a charge-coupled device 13.

Input light 14 reflected from the surface of a sample (not shown) passes through lens 11 before being filtered by AOTF 12 and the light which falls within the narrow pass-band of the filter 12 is then detected by CCD 13 to provide a two-dimensional greyscale image for that band (which for practical purposes is regarded as being a single wavelength). This is output as signal 14 to data processing apparatus (not shown). The pass-band frequency of the filter is varied to allow detection of images for a large number of light wavelengths. Conventionally, the filter would scan stepwise through the IR or NIR band.

The CCD 13 is synchronised with the operation of the filter 12 so that the entire image is captured and output before the pass-frequency is changed. The output signal 14 for the $j$th pass-frequency is stored as a matrix $I_j$ in memory buffer 15. This matrix has dimensions corresponding to the numbers of pixels in the x- and y-directions on the CCD.

As indicated earlier, the conventional method for processing the data is to create a hypercube from the full set of matrices $I_j$ and then to multiply each of the pixel intensity values forming the hypercube by a regression vector (or vectors if, for example, a plurality of compounds are to be detected), in the same way as a hypercube created by a conventional pushbroom apparatus.

The present example takes advantage of the fact that it is possible to control AOTFs to enable great flexibility in how individual wavelengths are manipulated. AOTFs are solid-state devices controlled by attached piezoelectric transducers. These transducers can be controlled by careful manipulation of their applied frequencies to select a particular pass-frequency. In this example, instead of simply scanning through each wavelength in turn, the control of which wavelengths are transmitted through the filter is determined by the model vector **b** which has previously been created in the conventional manner using spectra of the same type as observed in the hyperspectral camera.

If it is desired to provide a chemical image of the distribution of a plurality of compounds, a corresponding number of regression vectors is used. Thus, to see the distribution of e.g. glucose or methanol, there will be available corresponding regression vectors $\mathbf{b}_{glucose}$ and $\mathbf{b}_{methanol}$.

The regression vector(s) will contain $j$ coefficients (i.e. one for each wavelength that is detected) and a number of these will be zero or close to zero. Since the product of any matrix coefficient with a zero vector coefficient is obviously zero, there is no need to sample light at that wavelength and so the filter is never set to pass that wavelength. Likewise, very small coefficients will have a negligible effect on the result. To gain even more parsimonious models, various variable selection methods can be used to create models with high precision and small numbers of variables. In other words, to be even more efficient, the apparatus only studies the wavelengths that are necessary to achieve the desired accuracy.

Thus, to produce chemical image data for a given compound, the apparatus steps through each possible input light wavelength in turn and where (but only where) the corresponding regression vector coefficient $j$ is significantly different from zero, the following further steps are carried out:

Firstly, the filter 12 is controlled in the conventional manner to let through light at the wavelength corresponding to the non-zero coefficient $j$. The CCD 13 then records the light falling on it and sends the resulting data 14 to a memory storage 15 in the data processing apparatus where matrix $I_j$ is stored temporarily replacing the previous content of that storage.

The next step is to multiply each element/pixel in matrix $I_j$ by $b_j$ (the coefficient - a scalar - for the sampled wavelength) and add the result to matrix $\mathbf{C}_{j-1}$ which is located in another storage 16. Initially, when $j$=1, $\mathbf{C}_{j-1} = \mathbf{C}_0 = 0$, i.e. it is an empty memory storage with only zeros. See Figure 3(b).

It is important to note that $\mathbf{C}_j$ is overwritten once for each regression coefficient. At the end, each element in $\mathbf{C}_j$ will contain the finished predicted concentration of a chemical compound or modelled property for every pixel. It will be seen that this is achieved with most of the computation of the chemical image taking place in memory directly connected to the charged coupled device and without the need to generate, store and then process a hypercube.

When all the wavelengths have been stepped through, the matrix **C** is complete for the intended compound concentration or property. This takes a fraction of a second and can be repeated many times to enable real-time imaging. The process can then be repeated for the other compounds or properties using a new regression vector and then image (s) can be displayed as with the previous embodiment.

The working of this example can be understood by assuming that we have a hyperspectral data cube **X**. A spectrum $\mathbf{x}^T$ for a certain pixel is then multiplied by the corresponding regression vector **b** to produce the estimated value:

$$y_j = \mathbf{x}^T \mathbf{b} = b_1 x_1 + b_2 x_2 + \cdots + b_j x_j \qquad (3)$$

Note that $y_j$ is a scalar which is the result after having added the contribution from the wavelength indices from $1$ to $j \leq$ K. The best result will usually be after all **K** relevant wavelengths have been used. We would have needed to perform one such multiplication for every pixel in the hyperspectral image to obtain a predicted chemical image **C**. This is very time consuming, but here in this invention, everything happens in parallel by using whole image buffers and not storing data for more than necessary to perform simple addition and multiplication operations. Assume that each image plane for wavelength index $j$ is $\mathbf{Z}_j$. Thus $\mathbf{Z}_j$ is a proper image recorded at wavelength $j$. The parallel version of Equation 3 is therefore:

$$\mathbf{C}_j = \mathbf{Z}_1 b_1 + \mathbf{Z}_2 b_2 + \cdots + \mathbf{Z}_j b_j \qquad (4)$$

Since we do not store every $\mathbf{Z}_j$ the process controlled at the speed of the AOTF can also be written as:

$$\mathbf{C}_{j+1} = \mathbf{C}_j + \mathbf{Z}_{j+1} b_{j+1} \qquad (5)$$

To accomplish real-time performance, very fast electronic components should be used in connection with the AOTF. In addition, the storage 16 containing **C** should be updated at maximum clock frequency in synchronization with the AOTF to deliver optimal performance.

In both examples, the camera is controlled in response to the calculation steps. Thus, the completion of one round of calculations triggers the output of the next matrix of data from the camera.

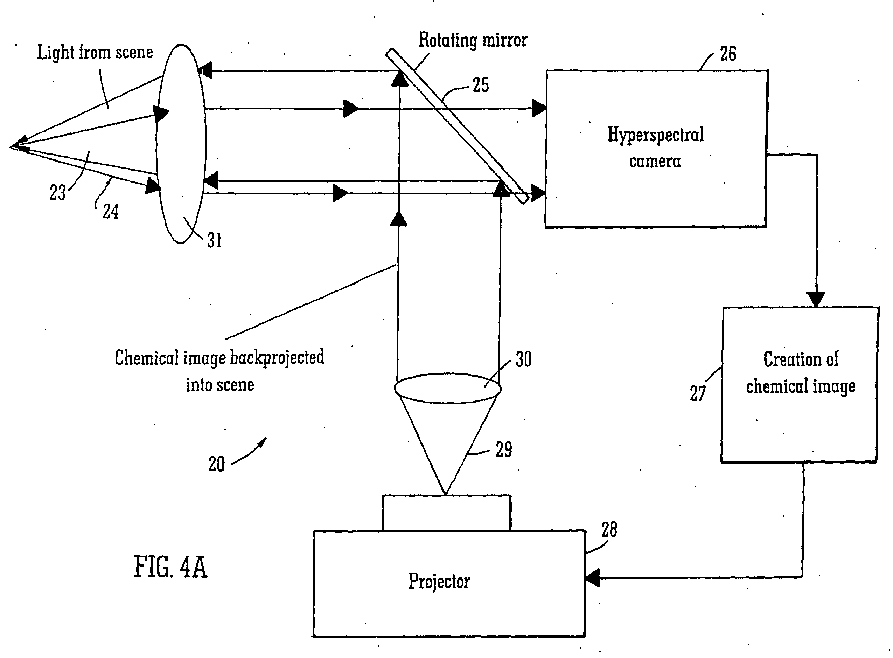

Figure 4A illustrates schematically the operation of an embodiment of the invention, which is an apparatus for displaying chemical images such as those obtained in the previous examples, and specifically, it relates to an apparatus using a tuneable filter as described above with reference to Figure 2. It projects a chemical image of an object back onto that object. Figure 5 illustrates this apparatus 20 being used by a user 21 to image an object 22. Region 23 is where light travels from the object to the apparatus 20 and back from the apparatus as it projects onto the object.

Returning to figure 4A, light 24 from the object 22 (which is illuminated by natural light) passes through an objective lens 31 of the apparatus. In its path is rotating mirror 25 and when the mirror is parallel to the path of the rays of light 24, the light is allowed to pass on to hyperspectral camera 26 which is of the AOTF type. The output from the camera is transmitted to processor 27 where the chemical image data is generated. The camera 26 and processor 27 operate in the manner discussed above whereby a series of monochromatic images are passed to the processor and the image is built up as the camera scans through the appropriate wavelengths.

The image data is then transmitted to a projector 28 whose output image is focussed by lens 30 towards the rotating mirror 25. When the mirror is in the position illustrated, the image is reflected off the mirror and back through lens 31 to the imaged object 22.

It will be appreciated that as the mirror rotates, the apparatus alternately samples light from the object 22 and projects an image onto it. The mirror rotates at sufficient speed that the impression of a continuous image is provided.

To minimize interference between projection and detection, in a modified embodiment, proper filtering of the projection light is performed. In cases where the hyperspectral detector is operating outside the visible range, e.g. in the UV or (near)infrared, various filters can be used to block any contributions from the projector in the detection range of the camera. It should be pointed out that such filters may need to be cooled to avoid over-heating.

When using ordinary light projectors there is a need to focus the system which is achieved in this embodiment using known dynamic autofocussing apparatus (not shown) in which a laser is provided to rapidly measure the distance from the projector to the surface. The laser is provided in the body of the apparatus and arranged to direct its beam parallel to the optical axis such that it reflects off the sample that is being imaged. The reflected laser light is then detected and the focus adjusted accordingly in the known manner. (In other embodiments, alternative known rapid auto focussing techniques may be used.) As the hyperspectral camera is moved, the auto focussing system dynamically ensures that the backprojected image onto the surface stays in focus.

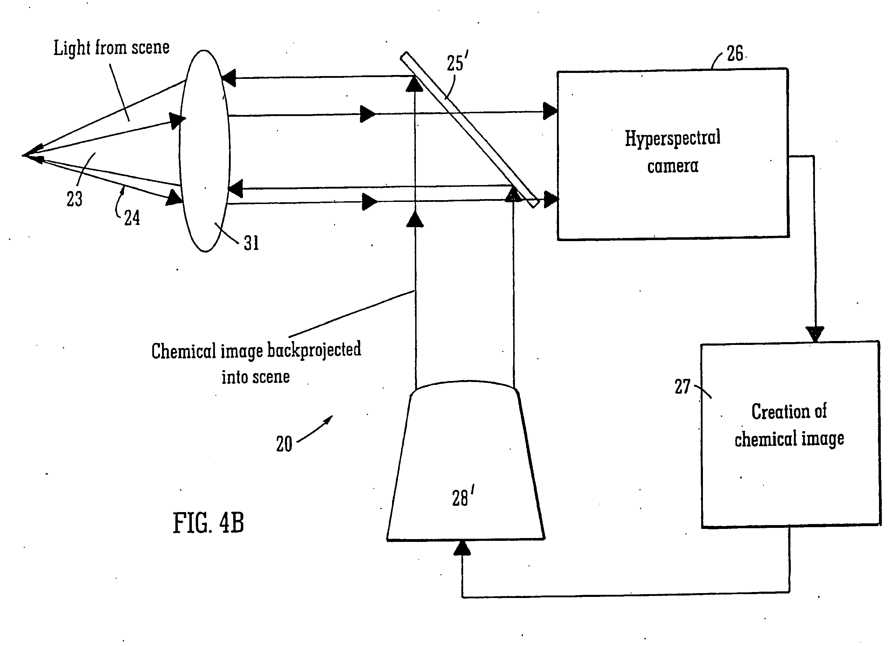

In a further embodiment of the invention shown in Figure 4B, in place of the ordinary light projection system just described, a laser projection system is used to draw images onto the sample surface. The frequency of light used for projection is chosen to be significantly shifted from that used for imaging and therefore the rotating mirror is not required.

The arrangement of components in this embodiment corresponds to those in described above in relation to Figure 4A with the following modifications (reference numerals corresponding to those in Figure 4A are used for common components). The normal light projector and lens is replaced by a laser projector 28' and a half silvered mirror 25' is provided in place of the rotating mirror to allow simultaneous imaging and projection along a common axis. Thus, light from the sample may pass through the half-silvered mirror to the hyperspectral camera and light from the laser projector is reflected from the mirror 28' and back towards the sample.

An advantage of the use of laser light for projection is that is minimizes focussing problems. Furthermore, the frequency of light used for projection is chosen to be significantly shifted from that used for imaging to minimize the interference between the detection and projection parts of the system. This embodiment, also has the advantage of not requiring moving parts, i.e. the rotating mirror.

For example, where near infra-red imaging is used (say 900-1500nm), lasers with wavelengths of 500-600nm may be used for projection.

It will be appreciated that in either embodiment, where ambient light does not provide the appropriate illumination frequency then a separate light source may be provided, either integrated with the apparatus or separately.

## Claims

1. A method of generating a chemical or property image of an object (22) comprising the steps of receiving light from the object, obtaining hyperspectral image data from the light, processing the data to provide a chemical or property image, and projecting light representing the chemical or property image onto the object such that the projected light is in register with the imaged object so that compounds or properties detected in the image may be located on the object.

2. An apparatus for generating a chemical or property image of an object comprising a hyperspectral camera (20, 26) arranged to receive light from an object (22) and to output hyperspectral image data, a processor (27) for processing the hyperspectral data to provide a chemical or property image, and a projector (28, 28') arranged to project light representing the chemical or property image back towards the object, such that the chemical or property image is back-projected in register with the imaged object.

3. An apparatus as claimed in claim 2, wherein the light enters the camera along the same optical axis as the image is transmitted back to the object.

4. An apparatus as claimed in claim 3, comprising a rotating mirror (25) arranged to allow light from the imaged scene to pass into the apparatus via the same optical system as that which projects back the image.

5. An apparatus as claimed in claim 3, comprising a half-silvered mirror (25') arranged to allow light from the imaged scene to pass into the apparatus via the same optical system as that which projects back the image.

6. An apparatus as claimed in any of claims 2 to 5 comprising a laser projection system (28') for projecting images onto the sample surface, wherein the operating wavelength of the laser is selected to be outside the detection range of the hyperspectral camera.

7. An apparatus as claimed in any of claims 2 to 6, comprising an autofocussing system that in real-time updates the focus of the light projector.

8. An apparatus as claimed in any of claims 2 to 6, wherein filter(s) is/are provided to eliminate or reduce the overlap of the frequencies of received and projected light.

9. An apparatus as claimed in claim 5, wherein a filter is provided to filter received light prior to being received by the camera and/or a filter is provided to filter projected light.

## Patentansprüche

1. Verfahren zum Erzeugen eines chemischen oder Eigenschaften darstellenden Bildes eines Objekts (22), das die folgenden Schritte umfasst: Empfangen von Licht von dem Objekt, Erhalten hyperspektraler Bilddaten aus dem Licht, Verarbeiten der Daten, um ein chemisches oder Eigenschaften darstellendes Bild zu schaffen, und Projizieren von Licht, das das chemische oder Eigenschaften darstellende Bild repräsentiert, auf das Objekt, so dass das projizierte Licht auf das abgebildete Objekt ausgerichtet ist, so dass Verbindungen oder Eigenschaften, die in dem Bild detektiert werden, an dem Objekt lokalisiert werden können.

2. Vorrichtung zum Erzeugen eines chemischen oder Eigenschaften darstellenden Bildes eines Objekts, die enthält: eine hyperspektrale Kamera (20, 26), die dazu ausgelegt ist, Licht von einem Objekt (22) zu empfangen und hyperspektrale Bilddaten auszugeben, einen Prozessor (27), um die hyperspektralen Daten zu verarbeiten, um ein chemisches oder Eigenschaften darstellendes Bild zu schaffen, und einen Projektor (28, 28'), der dazu ausgelegt ist, Licht, das das chemische oder Eigenschaften darstellende Bild repräsentiert, zu dem Objekt zurück zu projizieren, so dass das chemische oder Eigenschaften darstellende Bild ausgerichtet auf das abgebildete Objekt zurück projiziert wird.

3. Vorrichtung nach Anspruch 2, wobei das Licht in die Kamera längs derselben optischen Achse eintritt, auf der das Bild zu dem Objekt zurück übertragen wird.

4. Vorrichtung nach Anspruch 3, die einen Drehspiegel (25) enthält, der dazu ausgelegt ist, Licht von der abgebildeten Szene zu ermöglichen, sich in die Vorrichtung durch dasselbe optische System wie jenes zu bewegen, das das Bild zurück projiziert.

5. Vorrichtung nach Anspruch 3, die einen halbversilberten Spiegel (25') enthält, der dazu ausgelegt ist, Licht von der abgebildeten Szene zu ermöglichen, sich in die Vorrichtung durch dasselbe optische System wie jenes zu bewegen, das das Bild zurück projiziert.

6. Vorrichtung nach einem der Ansprüche 2 bis 5, mit einem Laserprojektionssystem (28'), um Bilder auf die Probenoberfläche zu projizieren, wobei die Betriebswellenlänge des Lasers so gewählt ist, dass sie außerhalb des Erfassungsbereichs der hyperspektralen Kamera liegt.

7. Vorrichtung nach einem der Ansprüche 2 bis 6, die ein Autofokussierungssystem enthält, das den Brennpunkt des Lichtprojektors in Echtzeit aktualisiert.

8. Vorrichtung nach einem der Ansprüche 2 bis 6, wobei ein oder mehrere Filter vorgesehen sind, um die Überlappung der Frequenzen von empfangenem und projiziertem Licht zu beseitigen oder zu verringern.

9. Vorrichtung nach Anspruch 5, wobei ein Filter vorgesehen ist, um empfangenes Licht zu filtern, bevor es von der Kamera empfangen wird, und/oder ein Filter vorgesehen ist, um projiziertes Licht zu filtern.

**Revendications**

1. Procédé pour générer une image chimique ou une image de propriétés d'un objet (22), comportant les étapes consistant à recevoir de la lumière provenant de l'objet, obtenir des données d'images hyperspectrales de la lumière, traiter les données pour produire une image chimique ou de propriétés, et projeter de la lumière représentant l'image chimique ou de propriétés sur l'objet de telle sorte que la lumière projetée soit en concordance avec l'objet reproduit en image pour que des composés ou des propriétés détectés dans l'image puissent être localisés sur l'objet.

2. Dispositif pour générer une image chimique ou une image de propriétés d'un objet comportant une caméra hyperspectrale (20, 26) disposée de manière à recevoir de la lumière provenant d'un objet (22) et à délivrer en sortie des données d'images hyperspectrales, un processeur (27) pour traiter les données hyperspectrales pour produire une image chimique ou de propriétés, et un projecteur (28, 28') disposé de manière à projeter de la lumière représentant l'image chimique ou de propriétés en arrière vers l'objet, de telle sorte que l'image chimique ou de propriétés soit rétroprojetée en concordance avec l'objet reproduit en image.

3. Dispositif tel que revendiqué dans la revendication 2, dans lequel la lumière pénètre dans la caméra le long du même axe optique que celui selon lequel l'image est retransmise vers l'objet.

4. Dispositif tel que revendiqué dans la revendication 3, comportant un miroir tournant (25) disposé de manière à permettre à de la lumière provenant de la scène reproduite en image de passer dans le dispositif via le même système optique que celui qui rétroprojette l'image.

5. Dispositif tel que revendiqué dans la revendication 3, comportant un miroir semi-argenté (25') disposé de manière à permettre à de la lumière provenant de la scène reproduite en image de passer dans le dispositif via le même système optique que celui qui rétroprojette l'image.

6. Dispositif tel que revendiqué dans l'une quelconque des revendications 2 à 5, comportant un système de projection à laser (28') pour projeter des images sur la surface d'échantillon, dans lequel la longueur d'onde de fonctionnement du laser est sélectionnée pour être en dehors de la plage de détection de la caméra hyperspectrale.

7. Dispositif tel que revendiqué dans l'une quelconque des revendications 2 à 6, comportant un système de focalisation automatique qui met à jour en temps réel le foyer du projecteur de lumière.

8. Dispositif tel que revendiqué dans l'une quelconque des revendications 2 à 6, dans lequel le(s) filtre(s) est (sont) prévu(s) pour éliminer ou réduire le chevauchement des fréquences des lumières reçue et projetée.

9. Dispositif tel que revendiqué dans la revendication 5, dans lequel un filtre est prévu pour filtrer la lumière reçue avant d'être reçue par la caméra et/ou un filtre est prévu pour filtrer la lumière projetée.

Chemical image — built in real time

FIG. 1

Cumulative image buffer
to produce chemical image

$$I_j * b_j + C_{j-1} = C_j$$

15    16

Regression vector

| $b_1$ | | $b_{j-1}$ | $b_j$ | $b_{j+1}$ | | | $b_N$ |

CCD

13

Tunable
Filter

12

10

Input light
from sample
14

11

Whole image
at wavelength
no. j

Select new wavelength

FIG. 2

For each pixel (ij):
$$y = x^T b$$

Estimated regression coefficients

$b_j$

$b_1$ $b_2$ $b_3$ $b_4$ $b_5$ $b_6$ $b_7$ $b_8$ $b_9$

(a)

FOR EACH WAVELENGTH j DO:

BEGIN

$$\boxed{C_j} = \boxed{C_{j-1}} + b_j \boxed{I_j}$$

(b)

$$\boxed{C_{j-1}} = \boxed{C_j}$$

END

Accumulated chemical image

Image read from CCD at wavelength no. j

FIG. 3

FIG. 4A

Light from scene

Rotating mirror

26

25

Hyperspectral camera

23

24

31

Chemical image backprojected into scene

30

29

20

Creation of chemical image

27

28

Projector

Light from scene

25'

26

Hyperspectral
camera

23

24

31

Chemical image backprojected
into scene

20

28'

FIG. 4B

27

Creation of
chemical image

EP 2 019 299 B1

Hyperspectral camera

The camera both
projects and receives
light

21

20

23

22

Distribution patterns of
chemical or property

Backprojection of
chemical image

FIG. 5

z(K)

y(M)

[NxK]

[NxM]

[MxK]

x (N)

λ

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Vila et al.** SmartSpectra: Applying multispectral imaging to industrial environments. *Real-Time Imaging,* 2005, vol. 11, 85-98

- **D. L. Lau et al.** Real-time multispectral color video synthesis using an array of commodity cameras. *Real-Time Imaging,* 2005, vol. 11, 109-116